# EUROPÄISCHE PATENTSCHRIFT

(11) **EP 2 046 503 B1**
(45) Veröffentlichungstag und Bekanntmachung des Hinweises auf die Patenterteilung: **27.04.2011**
(21) Anmeldenummer: 07730049.9
(22) Anmeldetag: 11.06.2007
(51) Int. Cl.: B05B 7/14, B05B 5/16, B65G 33/34, B65G 53/10

(54) **VORRICHTUNG ZUM ZUDOSIEREN VON PULVER IN EINEN LUFTSTROM**
DEVICE FOR METERING POWDER INTO AN AIR FLOW
DISPOSITIF DE DOSAGE DE POUDRE DANS UN FLUX D'AIR

(30) Priorität: 25.07.2006 DE 102006034378
(43) Veröffentlichungstag der Anmeldung: 15.04.2009
(73) Patentinhaber: Robert Bosch GmbH, 70442 Stuttgart (DE)
(72) Erfinder: JANS, Geert, B-3630 Maasmechelen (BE); VAN DE ROSTYNE, Kris, B-3360 Opvelp (BE); CLERX, Bart, B-3746 Bilzen (BE)
(86) Internationale Anmeldenummer: PCT/EP2007/055707
(87) Internationale Veröffentlichungsnummer: WO 2008/012138

(56) Entgegenhaltungen:
- WO-A-00/74860
- WO-A-03/084672
- US-A- 5 487 624
- US-A- 5 573 149

## Beschreibung

### Stand der Technik

Die Erfindung geht aus von einer Vorrichtung zum Zudosieren von Pulver in einen Luftstrom, insbesondere von Pulver für elektrostatische Pulverbeschichtung, in einen Kanal, in dem Luft strömt, gemäß dem Oberbegriff des Anspruchs 1.

Bei derzeit eingesetzten Anlagen zur Pulverbeschichtung wird ein Luftstrom aufwärts durch ein Festbett aus Pulver geleitet. Das Durchleiten der Luft führt zu einem Druckabfall aufgrund des Strömungswiderstandes. Wenn die durch die Strömung auf die Körner des Festbettes wirkende Kraft gleich groß ist wie die Gewichtskraft, wird das Festbett fluidisiert. Sobald dieser Punkt erreicht ist, wird das homogene Luft-Pulver-Gemisch aus dem Vorratsbehälter über ein Venturisystem, das heißt eine Vorrichtung, um die Strömungsgeschwindigkeit eines Fluids durch eine konische Verengung in einem Rohr zu erhöhen, einer Sprühvorrichtung zugeführt. Durch die konische Verengung entsteht ein Druckabfall, durch den das Pulver aus dem fluidisierten Festbett gesaugt wird. In der Sprühvorrichtung wird das Pulver mit einer negativen Ladung geringer Stromstärke und hoher Spannung beaufschlagt.

Um das Substrat beschichten zu können, sind die Teile des Substrates, die beschichtet werden sollen, geerdet, so dass die negativ geladenen Pulverkörner von den Oberflächen des Substrates angezogen werden und auf diesen haften.

Nachteil dieses Systems ist es, dass eine Korngröße von einigen zehn Mikrometern erforderlich ist, um eine fehlerfreie Funktion des Systems gewährleisten zu können. Pulver mit geringerem Komdurchmesser kann mit diesem System nicht verarbeitet werden.

Darüber hinaus zeigt die US 5,487,624 eine Pulverdosiervorrichtung, die eine Messkapillare zur Bestimmung der Pulverfließrate umfasst. Die US 5,573,149 zeigt einen Vorratsbehälter für eine Pulverdosierung, der eine im Wesentlichen zylinderförmige seitliche Begrenzung aufweist und einen Bodenauslass zur Dosierung des Pulvers. Dieser Vorratstank umfasst eine zentrale Rührvorrichtung. Weiterhin ist aus der WO 00/74860 eine Pulverbeschichtungsvorrichtung bekannt, bei der die Pulverbeschichtung auf der Basis einer Zwei-Phasen-Mischung eines Pulvers mit einem Trägergas erfolg Aus der WO 03/084672 A ist eine weitere Vorrichtung zum Dosieren von Pulver in einem Gasstrom bekannt, die einen Zugabekanal zur Dosierung des Pulvers umfasst, wobei in diesem Zugabekanal das zu dosierende Pulver mit einem Trägergas vorgemischt wird.

### Offenbarung der Erfindung

Eine erfindungsgemäß ausgebildete Vorrichtung zum Zudosieren von Pulver in einen Gasstrom, insbesondere von Pulver für elektrostatische Pulverbeschichtung, umfasst einen Kanal, in dem Gas strömt, wobei in den Kanal ein Zugabekanal für das Pulver mündet. Die Dosierung des Pulvers erfolgt mittels einer Dosiervorrichtung. Erfindungsgemäß wird in dem Zugabekanal das Pulver mit Gas vorgemischt, wobei die Dosiervorrichtung so angeordnet ist, dass das Pulver quer zu dem im Zugabekanal strömenden Gas zudosiert wird.

Vorteil des Zudosierens des Pulvers mittels einer Dosiervorrichtung, mit der das Pulver quer zu dem im Zugabekanal strömenden Gas zudosiert wird, ist, dass auch Pulverpartikel, deren mittlerer Korndurchmesser kleiner als einige zehn Mikrometer ist, gleichmäßig dem Gasstrom zugemischt werden und so eine gleichmäßige und homogene Beschichtung ermöglicht wird.

Beispielsweise ist im Zugabekanal vor der Position, an der die Dosiervorrichtung in den Zugabekanal mündet, ein Gasfilter angeordnet. Durch den Gasfilter wird vermieden, dass Staub und andere Aerosole mit dem Gasstrom mitgeführt werden und so das Pulver verunreinigen. Derartige Verunreinigungen würden zu Fehlern in der Pulverbeschichtung des Substrates führen.

Zur Beschleunigung des Luftstromes im Bereich der Zugabestelle für das Pulver ist im Zugabekanal oberhalb der Zugabestelle für das Pulver vorzugsweise eine Drosselstelle ausgebildet. Aufgrund der Strömungsverengung in der Drosselstelle wird hier die Geschwindigkeit des Gasstromes erhöht. Durch die höhere Strömungsgeschwindigkeit wird die Gasströmung stärker turbulent und es erfolgt eine verbesserte Durchmischung von Gas und Pulver.

Um die Strömungsgeschwindigkeit an der Zugabestelle einstellen zu können, umfasst die Drosselstelle vorzugsweise einen Schieber, mit dem der Querschnitt des Zugabekanals verengt werden kann. Je enger der Querschnitt ist, umso höher ist die Strömungsgeschwindigkeit des Gases im Bereich des verengten Querschnittes. Der Schieber ist zum Beispiel eine Platte, die in den Zugabekanal geschoben werden kann. Hierbei handelt es sich um eine besonders einfache und damit kostengünstige Ausgestaltung eines Schiebers. Als Material für den Schieber eignen sich zum Beispiel Metalle, Polymere oder keramische Werkstoffe. Bevorzugt ist die Platte, mit der der Strömungsquerschnitt im Zugabekanal verengt werden kann, aus Metall gefertigt. Geeignete Metalle sind zum Beispiel Edelstahl, Aluminium oder andere korrosionsgeschützte Materialien. Besonders bevorzugt ist die Platte aus Edelstahl.

In einer weiteren Ausführungsform ist im Zugabekanal ein Fluidisator angeordnet, in welchem das Pulver fluidisiert wird. Hierzu ist im Fluidisator eine Achse aufgenommen, an der mindestens ein Rührelement aufgenommen ist, welches im Pulver rotiert. Durch die Rotation des Rührelementes wird Luft in das Pulver eingetragen. Am unteren Ende der rotierende Achse ist in einer bevorzugten Ausführungsform eine perforierte Scheibe angeordnet. Die Scheibe rotiert mit der gleichen Drehzahl wie die Achse. Unterhalb der rotierenden Scheibe ist im Fluidisator ein Anschlussstück aufgenommen, mit welchem der Fluidisator mit dem Kanal verbunden ist, in dem das Gas strömt. Damit durch das im Kanal strömende Gas kein Pulver aus dem Fluidisator gesaugt wird, ist im Anschlussstück mindestens eine Bohrung ausgebildet, über welche Luft angesaugt werden kann. Hierdurch fällt das im Fluidisator fluidisierte Pulver durch das Anschlussstück in den Kanal, wobei es mit der Luft gemischt wird. Hierdurch erfolgt eine gleichmäßige Durchmischung mit dem Gasstrom, wodurch ebenfalls eine fehlerfreie Beschichtung ermöglicht wird.

Als Dosiervorrichtung zur Zudosierung des Pulvers in den Gasstrom ist jede dem Fachmann bekannte Dosiervorrichtung einsetzbar. Bevorzugt ist die Dosiervorrichtung eine Dosierschnecke. Vorteil einer Dosierschnecke ist, dass mit dieser ein gleichmäßiger Strom des Pulvers ermöglicht wird. Der Durchmesser der Dosierschnecke, die Gangtiefe, die Gangsteigung und die Drehzahl, mit der die Dosierschnecke betrieben wird, sind davon abhängig, wie groß die Menge an Pulver ist, die dem Volumenstrom zudosiert wird.

Die Bestimmung des Durchmessers, der Gangtiefe und Gangsteigung sowie der Drehzahl der Dosierschnecke, um den gewünschten Durchsatz zu erzielen, sind dem Fachmann bekannt und nicht Gegenstand der vorliegenden Erfindung.

In einer besonders bevorzugten Ausführungsform mündet der Zugabekanal, in dem das Pulver mit einem Gasstrom vorvermischt wird, unter einem rechten Winkel in den Kanal, in dem das Gas strömt. In diesem Kanal wird das vorgemischte Pulver/Gas-Gemisch mit dem Luftstrom weiter vermischt.

Um die Strömungsgeschwindigkeit des Gases zu erhöhen, ist der Kanal, in den der Zugabekanal mündet, vorzugsweise als Venturikanal ausgebildet. Die Ausbildung als Venturikanal bedeutet, dass der Kanal in Strömungsrichtung des Gases vor der Mündung des Zugabekanals eingeschnürt wird, wodurch sich dessen Querschnitt verengt. Aufgrund des verengten Querschnittes wird die Strömungsgeschwindigkeit des Gases erhöht. Nach der Verengung erweitert sich der Kanal wieder, so dass Turbulenzen in der Gasströmung entstehen. Durch diese Turbulenzen wird das in den Kanal zugegebene Pulver/Gas-Gemisch mit dem Gas vermischt, so dass eine einheitliche Gas/Pulver-Mischung entsteht, bei der der Volumenanteil an Gas größer ist als in der Pulver/Gas-Mischung im Zugabekanal.

An den Kanal schließt sich vorzugsweise ein Schlauch oder ein Rohr an, durch welchen das Gas/Pulver-Gemisch zu einer elektrostatischen Sprühvorrichtung transportiert wird. Mit der elektrostatischen Sprühvorrichtung kann das Gas/Pulver-Gemisch dann zur Beschichtung eines Substrates eingesetzt werden.

### Zeichnung

Ausführungsbeispiele der Erfindung sind in der Zeichnung dargestellt und in der nachfolgenden Beschreibung näher erläutert.

Es zeigt:
- Figur 1: eine schematische Darstellung eines rechtwinkligen Venturisystems,
- Figur 2: eine schematische Darstellung einer nicht erfindungsgemäßen Vorrichtung zur Zu- mischung von Pulver in einen Luftstrom,
- Figur 3: eine schematische Darstellung einer erfindungsgemäßen Vorrichtung mit Flui- disator und
- Figur 4: ein erfindungsgemäß ausgebildetes Anschlussstück.

### Ausführungsbeispiele

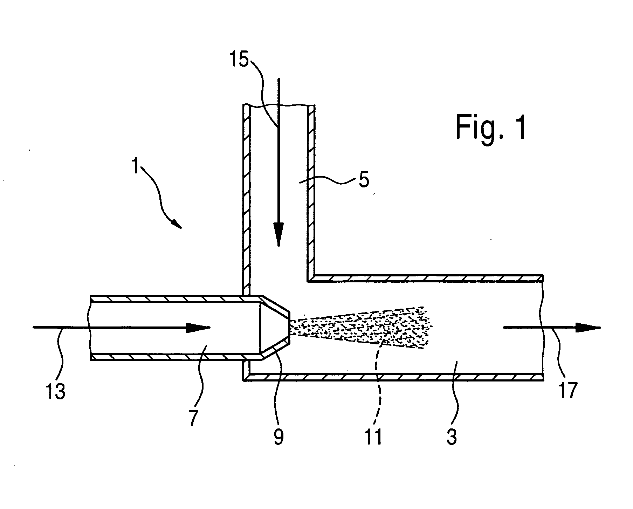

Figur 1 zeigt eine schematische Darstellung eines Venturisystems.

Ein Venturisystem 1 umfasst einen Kanal 3, in den unter einem im Wesentlichen rechten Winkel ein Zugabekanal 5 mündet. Neben dem rechten Winkel kann der Zugabekanal 5 aber auch unter jedem beliebigen anderen Winkel in den Kanal 3 münden. Im Bereich der Mündung des Zugabekanals 5 mündet in den Kanal 3 ein weiterer Kanal 7. Der weitere Kanal 7 endet in Form einer Düse 9 im Kanal 3. Durch die Düse 9 wird die Strömungsgeschwindigkeit des im weiteren Kanal 7 strömenden Fluids erhöht. Das im weiteren Kanal 7 strömende Fluid ist vorzugsweise ein Gas, insbesondere Luft. Das Gas, insbesondere die Luft, strömt durch die Düse 9 in Form eines Strahls in den Kanal 3. Der Strahl ist hier mit gestrichelten Linien angedeutet und mit Bezugszeichen 11 bezeichnet.

Über den Zugabekanal 5 wird dem Kanal 3 ein Pulver/Gas-Gemisch zugeführt. Als Gas eignet sich insbesondere Luft, es kann aber auch jedes andere Fluid, insbesondere jedes andere Gas, welches nicht mit dem Pulver chemisch reagiert, eingesetzt werden. Bevorzugt ist jedoch Luft.

Aufgrund der hohen Strömungsgeschwindigkeit des Gases, das über den weiteren Kanal 7 und die Düse 9 in den Kanal 3 strömt, bilden sich im Bereich der Mündung der Düse 9 Turbulenzen aus. Aufgrund der Turbulenzen erfolgt eine schnelle Vermischung des Gases, das über den weiteren Kanal 7 in den Kanal 3 strömt, und des Pulver/GasGemisches, welches über den Zugabekanal 5 in den Kanal 3 zugeführt wird.

Durch den Kanal 7 strömt vorzugsweise das gleiche Fluid, mit dem auch das Pulver gemischt ist. Wenn somit über den Zugabekanal 7 ein Pulver/Luft-Gemisch dem Kanal 3 zugeführt wird, so wird über den weiteren Kanal 7 ebenfalls Luft in den Kanal 3 zugeführt.

Die Strömungsrichtung des Gases im weiteren Kanal 7 ist hier mit einem Pfeil 13 dargestellt, die Strömungsrichtung des Pulver/Gas-Gemisches im Zugabekanal 5 mit einem Pfeil 15, und die Strömungsrichtung des Gas/Pulver-Gemisches nach der Vermischung des Pulver/Gas-Gemisches aus dem Zugabekanal 5 und dem Gas aus dem weiteren Kanal 7 ist mit dem Pfeil 17 dargestellt.

Ebenfalls eine Verbesserung der Vermischung des Pulver/Gas-Gemisches aus dem Zugabekanal 5 mit dem über den weiteren Kanal 7 in den Kanal 3 einströmenden Gas ergibt sich dadurch, dass die Strömungsrichtung des Pulver/Gas-Gemisches quer zur Strömungsrichtung des Gases ist.

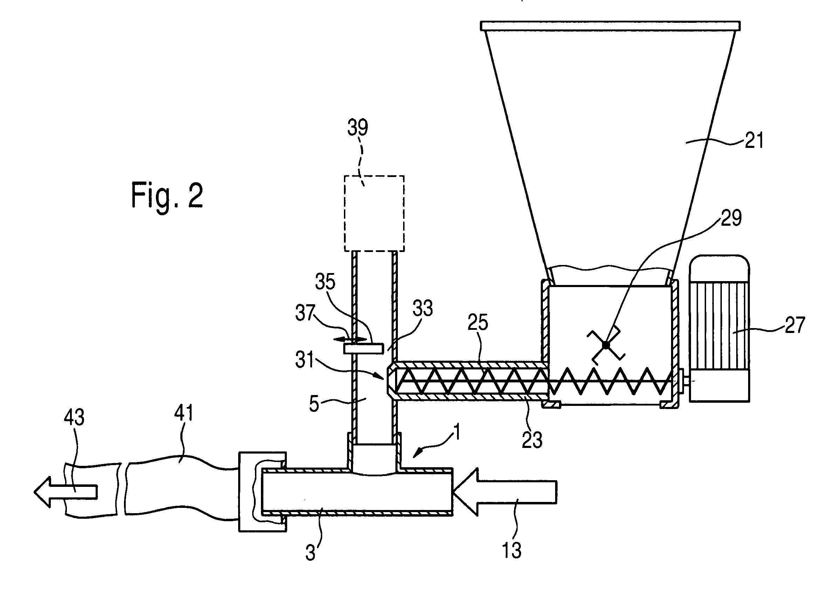

Figur 2 zeigt eine schematische Darstellung einer nicht erfindungsgemäßen Vorrichtung zur Zugabe von Pulver in einen Gasstrom.

Eine Vorrichtung zur Zudosierung von Pulver in einen Gasstrom umfasst einen Vorratsbehälter 21, in dem das Pulver vorrätig gehalten wird. An den Vorratsbehälter 21 schließt sich eine Dosiervorrichtung 23 an. Beispielsweise umfasst die Dosiervorrichtung 23 eine Dosierschnecke 25, die von einem Motor 27 angetrieben wird. Der Motor ist vorzugsweise ein Elektromotor.

Die Dosiervorrichtung 23 mündet im Zugabekanal 5, so dass das mit der Dosiervorrichtung 23 geförderte Pulver aus dem Vorratsbehälter 21 in den Zugabekanal 5 zudosiert wird.

Um zum Beispiel zu vermeiden, dass das Pulver im Vorratsbehälter 21 kompaktiert und dadurch nicht mehr zur Dosierschnecke 25 gelangt, um in den Zugabekanal 5 zudosiert zu werden, ist es möglich, wie hier dargestellt, oberhalb der Dosierschnecke 25 im Vorratsbehälter 21 eine Austraghilfe 29 anzuordnen. Die Austraghilfe 29 ist in Form eines Rades mit mehreren Blättern ausgebildet. Durch die Austraghilfe 29 werden sich ausbildende Brücken durch Kompaktierung des Pulvers aufgebrochen und so ein kontinuierlicher Pulverstrom zur Dosierschnecke 25 gewährleistet.

Oberhalb einer Zugabestelle 31, an der das Pulver mittels der Dosierschnecke 25 in den Zugabekanal 5 zudosiert wird, ist eine Drosselstelle 33 ausgebildet. Die Drosselstelle 33 ist vorzugsweise so gestaltet, dass sich der Strömungsquerschnitt und somit die Drosselwirkung einstellen lässt. So führt zum Beispiel ein verringerter Querschnitt dazu, dass die Strömungsgeschwindigkeit im Bereich der Drosselstelle 33 erhöht wird, während der Druckverlust zunimmt. Genauso führt ein vergrößerter Querschnitt an der Drosselstelle 33 dazu, dass die Strömungsgeschwindigkeit weniger stark zunimmt und dafür ein geringerer Druckverlust eintritt. Zum Einstellen des Strömungsquerschnittes an der Drosselstelle 33 kann die Drosselstelle 33 zum Beispiel in Form eines Ventils ausgeführt sein. Eine einfache und kostengünstige Konstruktion wird jedoch dadurch erreicht, dass die Drosselstelle 33 in Form eines Schiebers ausgeführt ist. Ein derartiger Schieber umfasst zum Beispiel eine Platte 35, die, wie mit dem Doppelpfeil 37 angedeutet, zum Verengen des Querschnitts an der Drosselstelle 33 in den Zugabekanal 5 hineingeschoben werden kann und zum Vergrößern des Querschnitts an der Drosselstelle 33 aus dem Kanal 5 herausgezogen werden kann. Die Platte 35 ist dabei vorzugsweise so angeordnet, dass der freie Strömungsquerschnitt der Drosselstelle 33 auf der Seite im Zugabekanal ausgebildet ist, an der die Dosiervorrichtung 23 mit der Zugabestelle 31 in den Zugabekanal 5 mündet.

Da es bei der Pulverlackierung erforderlich ist, dass das Pulver frei von Verunreinigungen auf die zu beschichtende Fläche aufgetragen wird, muss das Gas, dem das Pulver zugemischt wird, frei von festen Aerosolen sein. Derartige feste Aerosole sind zum Beispiel Staubkörner. Um aus dem Gasstrom, vorzugsweise dem Luftstrom, die Aerosole zu entfernen, ist am Zugabekanal 5 ein Filterelement 39 angeordnet. Das Filterelement 39 ist zum Beispiel ein Gasfilter, wie er dem Fachmann bekannt ist. Geeignete Gasfilter sind zum Beispiel Filtermatten, Taschenfilter, Kassettenfilter oder elektrostatische Filter. Die Porengröße des Filters ist davon abhängig, wie groß die Partikel sind, die aus dem Gasstrom ausgefiltert werden sollen. Vorteil eines elektrostatischen Gasfilters ist es, dass die Partikel durch elektrostatische Aufladung von dem Filter angezogen werden. Hierdurch erfolgt eine gegenüber den übrigen Filtersystemen verbesserte Reinigung des Gasstromes.

Um kontinuierlich Pulver in den Gasstrom zumischen zu können, ist das Filterelement 39 vorzugsweise ein kontinuierlich arbeitender Filter. Bei einem solchen Filter wird zum Beispiel der Filtereinsatz durch den Zugabekanal 5 bewegt, so dass jeweils ein Teil des Filtereinsatzes das zuströmende Gas reinigt, während gleichzeitig ein beladener Teil des Filtereinsatzes abgereinigt werden kann. Bei Einsatz eines nicht-kontinuierlichen Filters ist es ansonsten erforderlich, sobald der Filter beladen ist, das Filterelement auszutauschen, um einen ausreichend großen Gasstrom zu erzielen.

Nachdem das Gas das Filterelement 39 durchströmt hat, gelangt dieses zur Drosselstelle 33. An der Drosselstelle 33 wird aufgrund der Querschnittsverengung die Strömungsgeschwindigkeit des Gases erhöht. Durch die höhere Strömungsgeschwindigkeit des Gases bilden sich im Bereich der Drosselstelle 33 Turbulenzen aus. Durch diese Turbulenzen erfolgt eine bessere Vermischung von Gas und Pulver, welches - in Strömungsrichtung gesehen - direkt hinter der Drosselstelle 33 über die Zugabestelle 31 zudosiert wird. Eine gute Vermischung wird zusätzlich dadurch erzielt, dass die Dosiervorrichtung 23 mit der Zugabestelle 31 so im Zugabekanal 5 angeordnet ist, dass die Förderrichtung des in den Zugabekanal 5 geförderten Pulvers quer zur Strömungsrichtung des Gases im Zugabekanal 5 erfolgt.

Der Zugabekanal 5 mündet - wie in Figur 1 dargestellt - im Venturisystem 1. Hierbei kann der Zugabekanal 5 in jedem beliebigen Winkel im Venturisystem 1 münden.

In den Kanal 3 strömt über eine in Figur 2 nicht dargestellte Düse 9 vorzugsweise das gleiche Gas wie im Zugabekanal 5 mit einer hohen Geschwindigkeit. Durch die hohe Geschwindigkeit des Gases bilden sich Turbulenzen aus, so dass das im Kanal 3 strömende Gas sich mit dem Pulver/Gas-Gemisch aus dem Zugabekanal 5 vermischt und eine gleichmäßige Mischung entsteht. Gleichzeitig wirkt das über die Düse 9 strömende Gas, wie in Figur 1 dargestellt, als Pumpe und saugt aus dem Zugabekanal 5 den Gasstrom an. Daher ist es nicht erforderlich, am Zugabekanal 5 ein Gebläse anzuordnen, welches den Gasstrom durch den Zugabekanal 5 fördert. Hierzu ist der im Bereich der Düse 9 entstehende Unterdruck im Kanal 3 ausreichend. Es ist jedoch auch möglich, das Gas im Zugabekanal 5 gezielt durch ein Gebläse zu fördern. Das Gebläse ist dann vorzugsweise, in Strömungsrichtung des Gases gesehen, vor der Zugabestelle 31 angeordnet. Besonders bevorzugt ist das Gebläse dem Filterelement 39 vorgeschaltet.

An das Venturisystem 1 schließt sich an den Kanal 3 zum Beispiel ein Rohrsystem oder - wie hier dargestellt - ein flexibler Schlauch 41 an. Über das Rohrsystem oder den flexiblen Schlauch 41 wird das Gas/Pulver-Gemisch, vorzugsweise Luft/Pulver-Gemisch zum Beispiel zu einer Sprühpistole gefördert, mit welcher dieses auf ein zu beschichtendes Substrat aufgesprüht wird. Neben der Sprühpistole ist auch jedes weitere Sprühsystem geeignet, mit welcher Beschichtungen auf Substrate aufgebracht werden können. Geeignete Sprühsysteme sind zum Beispiel Hochrotationsglocken, elektrostatische Sprühsysteme oder jedes andere, dem Fachmann bekannte Zerstäubersystem. Bei einer Pulverbeschichtung werden vorzugsweise elektrostatische Systeme eingesetzt, damit das Pulver elektrostatisch aufgeladen werden kann und so durch elektrostatische Kräfte am zu beschichtenden Substrat haftet.

Die Strömung des Gas/Pulver-Gemisches, vorzugsweise des Luft/Pulver-Gemisches ist in der in Figur 2 dargestellten Form im flexiblen Schlauch 41 mit einem Pfeil 43 dargestellt.

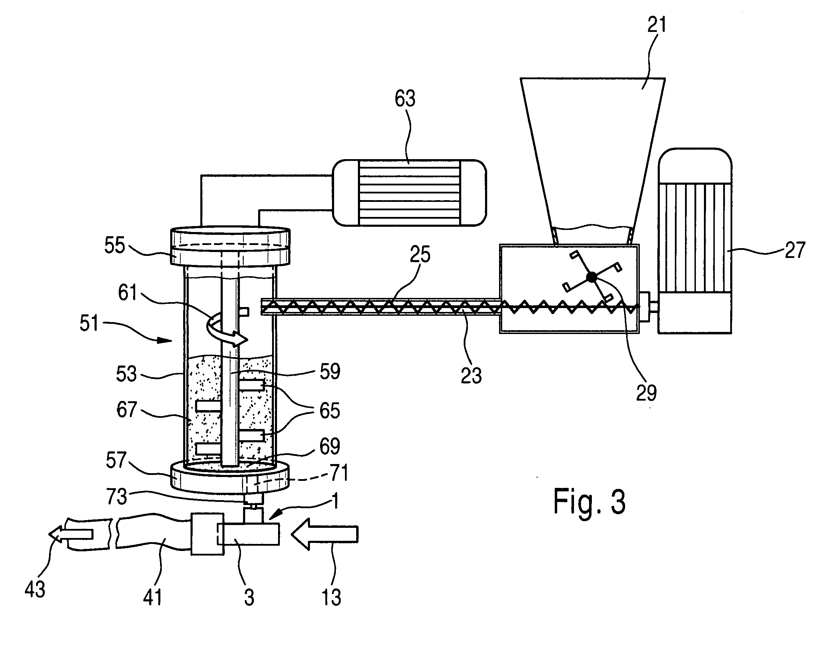

In Figur 3 ist eine erfindungsgemäß ausgebildete Vorrichtung mit Fluidisator dargestellt.

Die in Figur 3 dargestellte Vorrichtung unterscheidet sich von der in Figur 2 dargestellten Vorrichtung dadurch, dass das Pulver über die Dosiervorrichtung 23, bevorzugt der Dosierschnecke 25, einem Fluidisator 51 zugeführt wird. Der Fluidisator 51 umfasst ein Gehäuse 53, welches mit einem oberen Flansch 55 und einem unteren Flansch 57 verschlossen ist. Im Gehäuse 53 ist eine Achse 59 aufgenommen, die, wie mit dem Pfeil 61 dargestellt, im oberen Flansch 55 und dem unteren Flansch 57 drehbar gelagert ist. Angetrieben wird die Achse 59 mit Hilfe eines Motors 63. Der Motor 63 ist vorzugsweise ein Elektromotor. An der Achse 59 ist mindestens ein Rührelement 65 aufgenommen. In der hier dargestellten Ausführungsform umfasst die Achse 59 vier Rührelemente 65. Durch die Rotationsbewegung der Achse 59 mit den daran ausgebildeten Rührelementen 65 wird Gas, vorzugsweise Luft, in das im Fluidisator 51 enthaltene Pulver 67 eingetragen. Hierdurch wird das Pulver 67 fluidisiert. In einer bevorzugten Ausführungsform ist dem Pulver 67 ein Zusatzstoff zugegeben. Bevorzugter Zusatzstoff ist Aerosil, wenn das Pulver 67 ein Polyethylenpulver ist. Dieser Zusatzstoff verbessert die Fließfähigkeit des Pulvers 67, insbesondere, wenn ausreichend Luft zwischen den einzelnen Polyethylenpulverpartikeln enthalten ist. Diese Luft wird mit Hilfe der Rührelemente 65 zugeführt.

In einer bevorzugten Ausführungsform sind an der Achse 59 jeweils gegenüberliegend Öffnungen ausgebildet, in welche die Rührelemente 65 montiert werden können. Hierdurch ist es möglich, neben den in Figur 3 dargestellten vier Rührelementen 65, auch eine größere oder eine kleinere Anzahl an Rührelementen 65 an der Achse 59 zu montieren. Die Rührelemente 65 sind dabei vorzugsweise als Paddel ausgebildet. Die einzelnen Paddel können dabei in jedem beliebigen Winkel bezogen auf eine radiale Achse an der Achse 59 montiert sein.

Um die Achse 59 im oberen Flansch 55 und unteren Flansch 57 drehbar zu lagern, sind im oberen Flansch 55 und im unteren Flansch 57 vorzugsweise Wälzlager aufgenommen, in welchen die Achse 59 gelagert ist. Insbesondere bei dem Wälzlager im unteren Flansch 57 ist hierbei darauf zu achten, dass dieses gegen das im Fluidisator 51 enthaltene Pulver 67 abgedichtet ist, um Beschädigungen des Lagers zu vermeiden. Geeignete Wälzlager sind zum Beispiel Kugellager, Rollenlager, Kegelrollenlager, Nadellager oder auch jedes andere, dem Fachmann bekannte geeignete Wälzlager. Weitere geeignete Lager sind auch Gleitlager.

An der dem unteren Flansch 57 zugewandten Seite der Achse 59 ist vorzugsweise eine perforierte Scheibe 69 angeordnet. Die perforierte Scheibe 69 ist an der Achse 59 befestigt und rotiert so mit der gleichen Geschwindigkeit wie die Achse 59. Damit das Pulver 67 aus dem Fluidisator 51 dem Kanal 3 zugeführt werden kann, ist im unteren Flansch 57 eine Öffnung 71 ausgebildet, welche mit einem Anschlussstück 73 versehen ist, das mit dem Kanal 3 des rechtwinkligen Venturisystems 1 verbunden ist.

Die Menge an zugeführtem Pulver 67 in den Fluidisator 51 ist vorzugsweise so gewählt, dass diese genauso groß ist wie die Menge an Pulver, die aus dem Fluidisator 51 über die Öffnung 71 und das Anschlussstück 73 in den Kanal 3 strömt. Hierdurch wird der Pulverstand im Fluidisator 51 konstant gehalten.

Die Menge an Pulver, die in den Kanal 3 zudosiert wird, ist davon abhängig, wie groß der Öffnungsquerschnitt der Öffnung 71 ist. Auch wird die Menge des zudosierten Pulvers durch die Rotationsgeschwindigkeit der Achse 59 beeinflusst. Weiterhin wird auch über die Füllhöhe des Pulvers 67 im Fluidisator 51 die Menge an Pulver, welches in den Kanal 3 zudosiert wird, bestimmt. So wird bei einer größeren Füllhöhe der Druck des Pulvers 67 im Bereich der Öffnung 71 erhöht, so dass bei einem höheren Füllstand mehr Pulver durch die Öffnung 71 in den Kanal 3 strömt.

Weiterhin wird die Menge an Pulver, die in den Kanal 3 strömt, auch durch die Form der rotierenden Scheibe 69 beeinflusst. Zudem hat die Form der rotierenden Scheibe 69 auch einen Einfluss auf die Stabilität des Pulverflusses in die Öffnung 71. Die rotierende Scheibe 69 kann zum Beispiel eine Metallscheibe sein, in welcher Bohrungen ausgebildet sind über einen vorgegebenen Umfang, wobei der Radius des Umfangs, an dem die Bohrungen ausgebildet sind, der Position der Öffnung 71 im unteren Flansch 57 entspricht.

In einer weiteren Ausführungsform ist es möglich, zwischen der perforierten Scheibe 69 und dem unteren Flansch 57 eine weitere, hier nicht dargestellte nicht rotierende Scheibe vorzusehen, in der mehrere Öffnungen mit unterschiedlichem Durchmesser ausgebildet sind. Abhängig von der zuzudosierenden Pulvermenge wird die Öffnung mit dem geeigneten Durchmesser über der Öffnung 71 platziert. Abhängig vom gewählten Durchmesser ist so die Menge des durchfließenden Pulvers einstellbar.

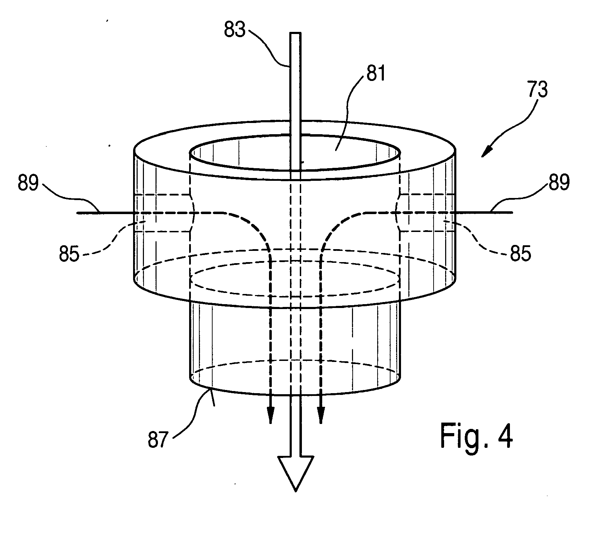

Das Anschlussstück 73 ist im Detail in Figur 4 dargestellt. Das Anschlussstück 73 umfasst eine zentrale Bohrung 81, durch welche, wie mit dem Pfeil 83 dargestellt, das Pulver aus dem Fluidisator strömen kann. Im Anschlussstück 73 sind weiterhin radiale Bohrungen 85 ausgebildet, die in der zentralen Bohrung 81 münden. Durch das im Venturisystem 1 strömende Gas entsteht an der dem Venturisystem 1 zugewandten Seite 87 ein Unterdruck. Über die radialen Bohrungen 85 wird aufgrund dieses Unterdrucks, wie mit dem Pfeil 89 dargestellt, Luft angesaugt. Hierdurch wird vermieden, dass Pulver aus dem Fluidisator gesaugt wird. Somit lässt sich die Menge an zudosiertem Pulver einzig über den Durchmesser der zentralen Bohrung 81 und den Betriebsmodus des Fluidisators einstellen.

## Patentansprüche

1. Vorrichtung zum Zudosieren von Pulver in einen Gasstrom (13), insbesondere von Pulver für elektrostatische Pulverbeschichtung, einen Kanal (3), in dem das Gas strömt, umfassend, wobei in den Kanal (3) ein Zugabekanal (5) für das Pulver mündet, wobei die Dosierung des Pulvers mittels einer Dosiervorrichtung (23) erfolgt, wobei in dem Zugabekanal (5) das Pulver mit dem Gas vorgemischt wird, wobei die Dosiervorrichtung (23) so angeordnet ist, dass das Pulver quer zu dem im Zugabekanal (5) strömenden Gas zudosiert wird, dass im Zugabekanal (5) ein Fluidisator (51) angeordnet ist, in welchem das Pulver (67) fluidisiert wird, **dadurch gekennzeichnet, dass** zwischen dem Fluidisator (51) und dem Kanal (3) ein Anschlussstück (73) aufgenommen ist, in welchem mindestens eine Bohrung (85) vorgesehen ist, über die Luft angesaugt werden kann.

2. Vorrichtung nach Anspruch 1, **dadurch gekennzeichnet, dass** das Fluidisieren des Pulvers (67) **dadurch** erfolgt, dass innerhalb des Fluidisators (51) eine Achse (59) aufgenommen ist, an der mindestens ein Rührelement (65) aufgenommen ist, welches im Pulver (67) rotiert.

3. Vorrichtung nach einem der Ansprüche 1 bis 2, **dadurch gekennzeichnet, dass** die Dosiervorrichtung (23) eine Dosierschnecke (25) umfasst.

4. Vorrichtung nach einem der Ansprüche 1 bis 3, **dadurch gekennzeichnet, dass** der Kanal (3), in dem das Gas strömt, als Venturikanal ausgebildet ist.

5. Vorrichtung nach einem der Ansprüche 1 bis 4, **dadurch gekennzeichnet, dass** sich an den Kanal (3) ein flexibler Schlauch (41) oder ein Rohr anschließt, durch welchen das Gas/Pulver-Gemisch zu einer elektrostatischen Sprühvorrichtung transportiert wird.

## Claims

1. Device for metering powder into a gas flow (13), in particular powder for electrostatic powder coating, comprising a channel (3), in which the gas flows, a feed channel (5) for the powder opening into the channel (3), the metering of the powder being performed by means of a metering device (23), the powder being premixed with the gas in the feed channel (5), the metering device (23) being arranged in such a way that the powder is metered in transversely in relation to the gas flowing in the feed channel (5) and a fluidizer (51), in which the powder (67) is fluidized, being arranged in the feed channel (5), **characterized in that** between the fluidizer (51) and the channel (3) there is disposed a connector (73), in which at least one bore (85) via which the air can be sucked in is provided.

2. Device according to Claim 1, **characterized in that** the fluidizing of the powder (67) is performed by disposing within the fluidizer (51) a spindle (59), on which there is disposed at least one agitating element (65), which rotates in the powder (67).

3. Device according to either of Claims 1 and 2, **characterized in that** the metering device (23) comprises a metering screw (25).

4. Device according to one of Claims 1 to 3, **characterized in that** the channel (3) in which the gas flows is formed as a Venturi channel.

5. Device according to one of Claims 1 to 4, **characterized in that** the channel (3) is adjoined by a flexible tube (41) or a pipe, through which the gas/powder mixture is transported to an electrostatic spraying device.

## Revendications

1. Dispositif de dosage de poudre dans un flux de gaz (13), notamment de poudre pour revêtement de poudre électrostatique, comprenant un canal (3) dans lequel s'écoule le gaz, un canal de dosage (5) pour la poudre débouchant dans le canal (3), le dosage de la poudre s'effectuant au moyen d'un dispositif de dosage (23), la poudre étant prémélangée avec le gaz dans le canal de dosage (5), le dispositif de dosage (23) étant disposé de telle sorte que la poudre soit dosée transversalement au gaz s'écoulant dans le canal de dosage (5), un fluidiseur (51) étant disposé dans le canal de dosage (5), dans lequel fluidiseur la poudre (67) est fluidisée, **caractérisé en ce qu'**entre le fluidiseur (51) et le canal (3) est logé un raccord (73) dans lequel est prévu au moins un alésage (85) par le biais duquel l'air peut être aspiré.

2. Dispositif selon la revendication 1, **caractérisé en ce que** la fluidisation de la poudre (67) s'effectue par le fait qu'un axe (59) est reçu à l'intérieur du fluidiseur (51), sur lequel est reçu au moins un élément agitateur (65) qui tourne dans la poudre (67).

3. Dispositif selon l'une quelconque des revendications 1 et 2, **caractérisé en ce que** le dispositif de dosage (23) comprend une vis de dosage (25).

4. Dispositif selon l'une quelconque des revendications 1 à 3, **caractérisé en ce que** le canal (3) dans lequel s'écoule le gaz est réalisé sous forme de canal Venturi.

5. Dispositif selon l'une quelconque des revendications 1 à 4, **caractérisé en ce qu'**un tuyau flexible (41) ou un tube se raccorde au canal (3), le mélange de gaz et de poudre étant transporté à travers celui-ci jusqu'à un dispositif de pulvérisation électrostatique.
